# EUROPEAN PATENT APPLICATION

(11) **EP 3 094 100 A1**
(43) Date of publication of application: **16.11.2016**
(21) Application number: 15001410.8
(22) Date of filing: 11.05.2015
(51) Int. Cl.: H04N 21/472, H04N 21/475

(54) **METHOD FOR MEASURING THE LEVEL OF ATTENTION OF A USER WATCHING A VIDEO**

(71) Applicant: Reboot Holding Ltd, ZBG 9015 Zebbug (MT)
(72) Inventor: LISI, Mario, 27100 Pavia (PV) (IT)

(57) **Abstract**

The present invention relates to a method for measuring a level of attention of a user, wherein a user and a video currently playing on a device are provided, the method comprising the steps of: showing said video to the user; generating at least a multimedia content to be proposed contextually with the playing video, wherein said multimedia content is generated so that it is overlapped and shown and/or played in a random way with respect to the playing video; asking the user to provide a feedback on the at least a multimedia content proposed; measuring the level of attention of the user to the playing video on the basis of the feedback provided.

The present invention further describes a training method comprising a method to measure the level of attention of a user watching a video and a method for broadcasting a video to a group of users for measuring their level of attention to said video.

The present method allows to Increase the focused attention of the user for the video and of measuring this degree of increased attention.

## Description

### TECHNICAL FIELD

The present invention relates to a method for measuring the level of attention of user watching a video, in particular a method of distribution and measurement of the level of attention that a community of users watching videos have. The present invention further relates to a training method and a software for cellular phones.

### BACKGROUND ART

Various methodologies to measure the degree of understanding of an Image shown to a user exist In the prior art. One example are the psychological tests supplying an Image for few Instants to a user and next asking information about the image seen.

These tests are often on paper version and with the advent of computers are carried out through a monitor. During these tests the user sees images on the monitor and at the end of the test must refer to the medical practitioner what he has seen.

Are also known various medical techniques to asses attention deficit, as ADHD (Attention Deficit Hyperactivity Disorder). Those methodologies show the user some images and Interact with him through optical sensors or other sensors adapted to evaluate the brain or cardiac activity

Further methodologies voluntarily Introduce noisy Images during the play of a video, In this sense, the subliminal advertising is an example, wherein a frame of the video is substituted with the image of a trademark or the image of an object to induce an unconscious desire in the user toward that trademark or that object.

In the subliminal advertising, the advertising Image completely substitutes the frame of the video, without overlapping of the image.

It is further known the method of the patent US8565323 describing how to correct a video with a series of involuntary noises. During the editing of the video, digital or in film, may occur that some involuntary noises, like spots or the like, could remain between a frame and the next one, covering just in part the frame.

In these case, when the video Is played, the user perceives involuntary the image of that frame and quickly and almost unconsciously moves the eyes towards it. During the play of a film, this element could be perceived as noise by the user.

Known methods in the state of the art describe solutions aimed at catching the attention of the user on an image at the end of evaluating the perception that the user has of it.

In the known methods, the image often completely cover the video, substituting it and obliging him to see the Image instead of the video.

Alternatively, the known methods show to the user an image that partially cover the video but that does not have any sense, as a noise or a spot. Further, known methods does not use the screened image to catch the attention on what is behind the image.

Known methods does not increase the attention level to the video on which the image is screened.

Also with the advent of mobile phone, that has deeply revolutionized the world of the graphic and video communication, there are no solution to the problems described above.

Cellular phones and in particular smartphones, that are cellular phone of third generation with Internet access and media player embedded, allowed the market to individually reach a user.

In this sense, recently a new advertising trend was born known with the name of mobile advertising.

Normally known methods of mobile advertising combine to a content of interest for the user a advertise. For example, allow to watch a video in view of some seconds played at the beginning of the video.

Solutions known in the mobile advertising thus exchange the content of interest for the user with a advertising content, without assessing the level of attention of the user for the advertising content.

Known solutions do not measure the level of understanding and the level of interest that the user has for a advertising content. In practice, known mobile advertising methods does not asses the efficiency and/or the effectiveness of the advertising content.

### SUMMARY

The present invention aim is to overcome the drawbacks of the methods known in the prior art. The cited drawbacks are overcome by a method for measuring the level of attention of a user, wherein a user and a video currently playing on a device are provided, the method comprising the steps of:
A- showing said video to the user;
B- generating at least a multimedia content to be proposed contextual with the playing video;
C- asking the user to provide a feedback on the at least a multimedia content proposed;
D- measuring the level of attention of the user to the playing video on the basis of the feedback provided;
wherein said multimedia content is generated at step B so that it Is overlapped and shown and/or played in a random way with respect to the playing video.

Advantageously, the present method allows to Increase the selective attention, namely the attention that allows to discriminate a stimulus from another.

The present method further allows to increase the attention focused to the video of the user.

Even more advantageously, the present method allows increasing the sensibility to video content and Increase the capability of the user to recognize the video when it is proposed again. The present method promotes the link of the content of the video to long term memory. A second aspect of the present invention is represented by a training method comprising a method to measure the level of attention of a user watching a video according the first scope of present invention.

Advantageously, the training method using the present method for measuring the level of attention maximizes the yield of a training path.

The training video shown to the user according the present methodology is easily memorized and remain in the user memory for a longer time.

A third aspect of the present Invention is a video broadcasting method to a group of users to measure their level of attention.

Advantageously, the present video broadcasting method allows to benefit the advantages of the method for the measure of the level of attention according the first scope of the present invention for a plurality of users.

Particular advantages of the broadcasting method according the present invention results when an advertiser desire reaching with an advertise a specific target of users and being certain of the effectiveness of the advertising campaign realized.

A fourth aspect of the present invention is a computer program loadable in the memory of a smartphone to carry out the steps of the for measuring the level of attention of a user watching a video according the first scope of the present invention, when said program Is executed on the smartphone.

Advantageously, the computer program according the present invention allows to benefit the advantages of the method for measuring the level of attention according the first scope of the present invention on a mobile device.

Even more advantageously, the computer program according the present invention allows maximizing the usefulness for the user.

These and other advantages will appear in more detail from the description, in the following, of a non-limiting embodiment with reference to annexed drawings.

### BRIEF DESCRIPTION OF DRAWINGS

In the drawings:
Fig. 1a shows a frame of a video wherein is shown a image of the method according the present invention.
Fig. 1b shows a further frame of a video wherein is shown a further Image of the method according the present invention.
Fig 1c shows a feedback request for a user on the Images shown.

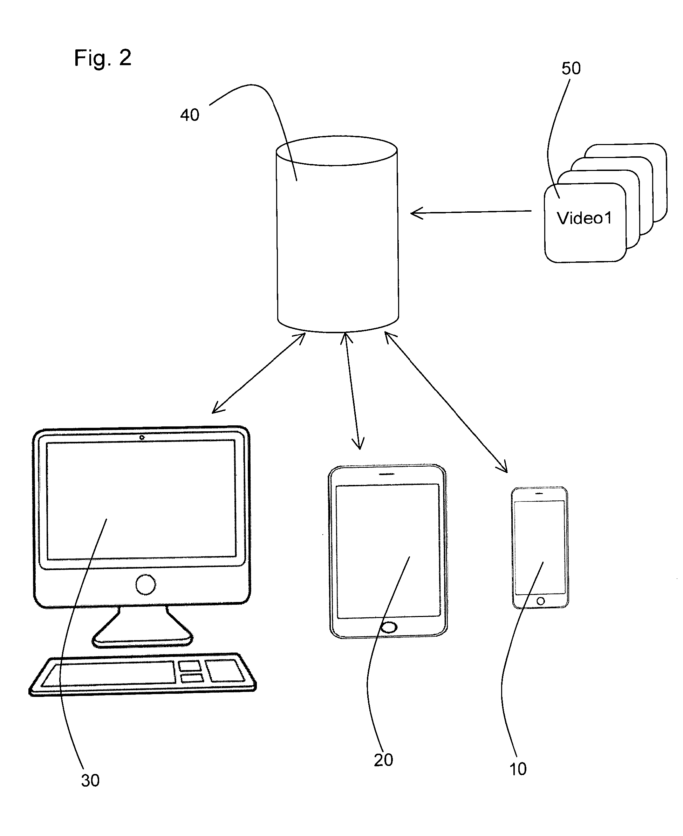

Fig. 2 shows a schematic representation of the system implementing the video broadcasting method to a group of users for measuring their level of attention.
Fig. 3 shows a particular version of the system with a mobile device transmitting and a mobile device receiving.

### DETAILED DESCRIPTION

The following description of exemplary embodiments refers to the accompanying drawings. The same reference numbers In different drawings identify the same or similar elements. The following detailed description does not limit the invention. instead, the scope of the invention is defined by the appended claims.

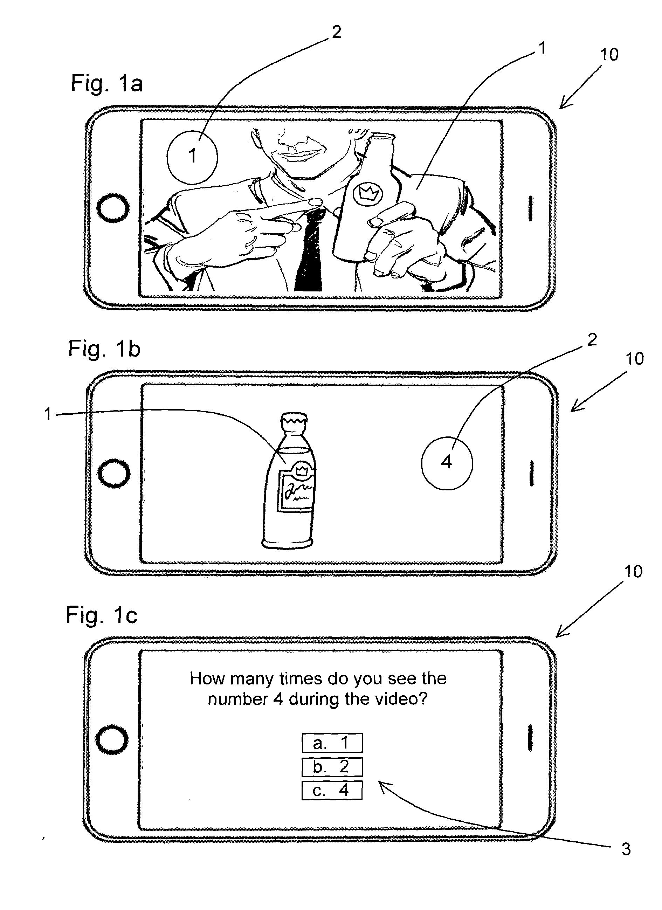

To understand the Idea underlying the present invention, reference to Fig. 1 may be done,

The present method comprises a first step of providing to a user a video 1. As known, a video comprises a plurality of Images interlaced, that typically vary in time, and to achieve the optical effect of moving images the frame rate, namely the number of frames shown in a second, must be greater than 10. Further, a video topically comprises a sound accompanying the show of the moving images.

The user may enjoy the video 1 through any kind of device 10 allowing an interaction with the user and an Internet access, even not continuous, e.g. a cellular phone of last generation, a smartphone, a computer, a tablet or a smart tv, namely a television equipped with internet connection.

The video 1 may be modified in advance with the addition of one or more multimedia contents to show/reproduce during the play of the video 1.

Alternatively, the video 1 may be directly modified from a software installed In advance on the device 10. in this case, a catalogue of multimedia contents (e.g. images 2) is loaded in advance on the memory of the device when the showing of the video 1 on the device 10 occurs, the software retrieves one by one multimedia contents (e.g. images 2) in the catalogue and adds them to video 1 under showing. In one embodiment, the multimedia content comprises one or more Images. The Images are shown overlapped to the video and played in a random time instant with respect to the video 1 currently playing and in a random region with respect to the video resolution. For example, it is intended to measure the attention of a user watching on a device a video of 5 minutes (5':00") with a resolution of 960 x 640 pixels (i.e. a reproduction rectangle measuring 960 x 640 pixels). A couple of reference coordinate is determined, e.g. the point (0, 0) intended as the vertex at the bottom left of the reproduction rectangle. The image to be shown overlapped to the video Is generated, characterized by a certain resolution, e.g. 240x180 pixel. A couple of reference coordinates is randomly generated, e.g. (26, 14). A random number, representing the instant in which overlap the image, is generated, e.g. 27 seconds. The image is overlapped to the video according the steps previously described. Thus, at the second 27 of the reproduction of the video, the image of 240 x 180 pixel in which the vertex bottom left is positioned at the coordinates (26, 14) of the video is overlapped to video itself.

A similar example may be done for a sound signal to be played randomly with respect to the reproduction of the video. In this case; the sound signal is generated, a random number is generated representing the time instant in which reproducing the sound signal, the sound signal is reproduced at the time instant previously determined, the sound signal Is overlapped with respect to the playing video.

In a further example, the random overlapping of the image may be combined with the random play of the sound signal. In another embodiment, the multimedia content may comprise a video, i.e. a plurality of images correlated together In a video stream and further associated to sound signal. In practice a test video is superimposed and played randomly to the "main video" playing. The considerations previously made are also correct for this case exemplified. In the following reference will be made to a multimedia content comprising one or more images. This choice is made for sake of simplicity, the same considerations are valid also for a multimedia content comprising one or more sound signals, except when differently explicitly mentioned. Images 2 are displayed during the video 1, or in whatever frame of the video 1, in a full random way. For example, in case of a single image 2, It may be displayed after some seconds from the start of the video 1, as well as at the half of the video 1. In case of a plurality of images 2, some could be displayed sequentially and near one from another, while others could be displayed occasionally.

The number of images displayed during the video 1 is connected to the length of the video 1, and is preferably lower than 7 shows, even more preferably 3.

The random positioning of the image 2 implies that the user watching the video Increases his selective attention. The image 2 proposed helps bypassing preconscious cognitive filters of the user that normally intervene when the mind Is In a conscious state, namely when the brainwaves are of beta type and their frequency vary in a range between 14 and 30 Hz.

The image 2 is displayed superimposed with respect to the video 1, namely the image 2 is visible over the frame of the video 1. Thus, the image 2 partially covers the frame of the video 1 on which the image 2 is displayed.

In case of sound signal multimedia content, this may be played superimposed with respect to the sound of the video. The sound signal partially covers the sound of the video without prejudice for the comprehension.

Even if the image 2 is superimposed with respect to the frame of the video, covers It only in part. In particular, the image 2 covers less than 20 % of the area in which the video 1 Is displayed, preferably the 5 %. In this way the comprehension of the message of the content of the video 1 is not affected.

When the video 1 is displayed within the display of a device 10, the video 1 may occupy a portion of the screen or the entire screen. In this case, the image 2 is displayed within this portion of the screen. In this way, the comprehension of the content of the video 1 is not affected and the remaining part of the screen, namely the one not interested for the playing of the video 1, may be used for other functions.

The image 2 is displayed in a position absolutely random of the frame, consequently the position in which appears may be any point within the frame.

Being the positioning of the image 2 random, an image 2 may appear In a corner of the video 1 as well as on a side of it.

Preferably, the image 2 does not appear in the central area of the video 1, namely centrally with respect to frame on which the image 2 is displayed. In this way the images of the video 1, that generally are centred with respect to the frame of the video 1, are not affected from a image 2 displayed according the method. In this way, the comprehension of the video 1 is not affected at all.

The random positioning of the Image 2 Implies that the user watching the video 1 Increases his selective attention.

The image 2 proposed helps bypassing preconscious cognitive filters of the user.

In case of a plurality of images 2 displayed, these have dimensions similar or equal but their content is not always the same.

The spatial positioning in the frame of the video does not apply In case of sound signal.

The selection of images 2 occurs in a fully random way, thus the images 2 may be In part equal and In part different, or all different with respect to the others. Images 2 showed are perceived by the user watching the video 1 as stimulus to the attention.

in case of sound signal, this may be a "bip", or any other sound void of any meaning, or a *gingle,* so as to not overwhelm the sound of the video.

Images 2 may be numbers, letters, words, a trademark or combination.

These represent stimulus void of a proper meaning so as to not overwhelm the content of the video 1 that remains the more Important message to provide to the user.

Further the image 2 is displayed in a transient way, namely appears and disappears, not remaining on the video 1. The length of visualization of the image 2 is lower than 4 seconds, preferably 1 second. The multimedia content vanishes however within the end of the video. The fact that the image 2 displayed may change its content with respect to the previous one, e.g. the first image 2 is the letter "A", whilst the second image is the number "11", requires to the user watching the video an increased selective attention.

The attention for the image provided, by the user, helps bypassing preconscious cognitive filters of the user.

The video 1 may further be divided in sections according its length, e.g. initial section, central section and final section, and for each section may be displayed and/or played at least a multimedia content, for example at least a images 2 may be displayed.

In this way, the selective attention of the user is catch for the length of the video 1.

it is preferable displaying a image 2 after the start of the video 1, namely within a time corresponding at the 10% of the length of the video from the start, and within the end of the same, namely within a time corresponding at the 10% of the length of the video from the end, to trigger from the beginning the process of selective attention and extending It as long as possible with respect to the length of the video 1. What described is applicable also when the multimedia content is not an image, but for example a sound signal.

Preferably, the video may be displayed on a smartphone or a computer, so as to allow the interaction with a user through a keyboard or a touchscreen.

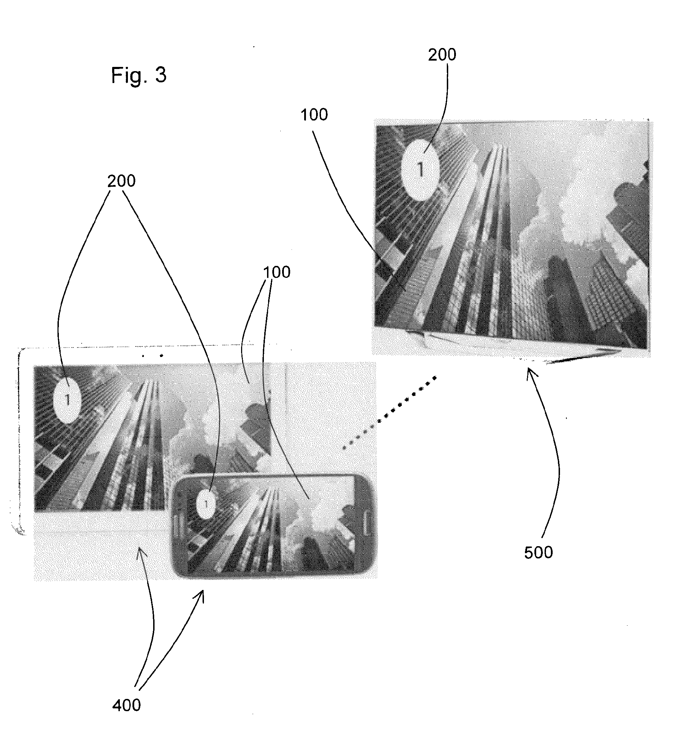

In a particular version of the present method, shown in figure 3, the video 100 may be displayed on the screen of television 500 through a mirroring process of a mobile device 400 or of a computer.

Through the known process of mirroring, the video 100 with the media content 4 appearing on the mobile phone/tablet/computer 400 Is transmitted to the television 500, allowing the user a more comfortable fruition of the video 100. In this particular version of the method, the transmitting device 400, namely the mobile phone/tablet/computer, and the receiving device 500 sees exactly what displayed on the transmitting device 400.

Alternatively, It is possible that the transmitting device 400, after the trigger of the mirroring process, acts like a remote controller for the receiving device 500.

In this particular version, also the multimedia content 200 superimposed to the video 100 Is displayed on the receiving device 500.

In this case, the mobile phone screen or the monitor of the computer allows the user to see the video 1 with the images 2 superimposed.

The video 1 with at least a image 2 appearing and disappearing superimposed with respect to it Is shown to the user,

The user, after watching the video 1 and the one or more images 2 displayed during the video 1 is questioned on the images 2 displayed.

According to the method, a feedback on the image 2 displayed Is asked.

The questions 3 are displayed on the screen of the device at the end of the video 2. For example, to the user may be asked how many images 2 has seen, or what kind of images 2 has seen, or how many images of a same kind has seen.

In case of sound signal as multimedia content, to the user may be asked how many similar sounds has heard.

The question may be, alternatively, audibly, so as the user hears it instead of seeing it. For example, after the end of the video, the user could hear the following question "how many times did you hear the sound of a bell?".

The logic driving the choice of the questions for the user may be random or predetermined. Since the logic of appearing and disappearing of the images 2 during the video 1 is random, the user develops a particular attention for the video 1 and the images 2 displayed.

The method generates in the user a positive prejudice for the video 1 and, when a feedback from him Is required, answers more efficiently to questions on the content of the video 1 with respect to methods known In the field.

According to the method, a measure of the level of attention of the user for the video 1 on the basis of the feedback provided is carried out.

The feedback of the user Is deemed positive if the user recognizes the images 2 displayed and he can answer to the questions 3. In particular, the feedback may be judged positive if the user can recognize every image 2 shown during the video 1. The same principle applies when the multimedia content is not an image, but for example is a sound signal.

If the user recognizes all the images 2 displayed the degree of selective attention is maximum. Furthermore, the measure allows certificating the degree of attention, in particular when the video is an advertising video.

The method may further comprise the steps of:
- providing the user at least a question on the content of the video 1 shown at the end of the video 1;
- asking the user to provide a second feedback on the at least one question provided;
- measuring the level of comprehension of the video 1 from the user, according to the second feedback provided.

The question may be provided in an audible format or displaying it on the screen of a device of the user.

To measure the degree of comprehension of the video 1, the method provides one or more questions to the user at the end of the video 1 displayed. The answer to the one or more questions represents the second feedback from the user.

The superimposed and random display of the images 2 on the video 1 allows predisposing the user to a selective attention, namely the ability to distinguish a stimulus from another. The user thus results ready to understand with focused attention the content of the video 1. The content of the video 1 is in this way consciously connected to the long term memory.

According to the present method, the user tends developing a sympathy for the content of the video 1 provided, in particular in the further visualizations of the same. For example, In case of an advertising spot, the user tends developing attraction for the commercial message and memorizing the trademark. This effect derives from the progressive attention technique generated from the present method and the persuasive effect created from the images displayed or the sound reproduced.

According to the method, the level of comprehension of the video 1 is measured on the basis of the second feedback provided from the user.

The second feedback of the user is deemed positive if the user answers positively to one or all questions on the content of the video 1. If the user recognizes all the images displayed the degree of focalized attention is maximum.

If the first feedback does not reach a certain threshold the initial steps of the method may be repeated to further connect the content of the video 1 to the long term memory.

Said certain threshold identifies the minimum level of comprehension of the video 1 or recognizing of images 2 displayed. The threshold is reached when more than 80 %, preferably the 100%, of the answers provided are correct, for example if the number of images of certain type reported from the user are correct, for example if the number of certain kind of images reported from the user corresponds to the number of the images effectively displayed during the video.

The method may further comprise the steps of:
- asking the user to provide a third feedback on the level of pleasure of the video 1;
- measuring the level of interest for the video 1 of the user on the basis of the third feedback provided.

The request to the user of a third feedback on the level of pleasure of the video 1, allows crystallizing the memory of the content of the video 1 in the memory of the user and strengthening his consciousness.

Said first, second or third feedback may be expressed from the user through a keyboard or a touchscreen of the device displaying the video or different device in case of mirroring.

The method may further comprise the step of providing to the user questions relating his habits or alternatively a psycho-attitudinal test.

This step allows profiling the user and selecting for him further videos in line with his taste. The method may further comprise a step of physical interaction with the user, as taking a voucher.

The present Invention further provides a computer program loadable on the memory of a smartphone 10 and executable from a microprocessor unit of the smartphone to carry out the steps of the method according the present Invention when the program is executed on the smartphone 10.

The computer program may be loaded on the smartphone 10 downloading it from the web, in form of an "app", namely application for smartphone.

The program other than the steps of the present invention may provide further functions for the user. For example, may able the user receiving/transmitting messages from/for the remote server 40 or sharing video 1 with other users.

Further, the computer program carries out the method steps to measure the level of attention of a user for a video 1.

The present invention further provides a training method comprising a method for measuring the level of attention of a user watching a training course video 1 according any of the previous features described.

The present Invention is particularly adapted for the academic and corporate training. Exploiting the selective and focused attention, the training method allows maximizing comprehension of training contents provided to the user.

The present invention finally comprises a broadcasting method of a plurality of videos 50 to a group of users to measure their level of attention for said videos. The users may be previously registered to a video broadcasting service.

The users are divided in clusters according the consumer habits, for example teenager, moms, living in the city of Milan, etc.

To segregate a user in a cluster, information for identifying his consumer habits are gathered.

A remote server 40 containing a plurality of videos 50, for example a plurality of advertising spots, is provided to carry out the broadcast of videos to the user. Each video may be associated to one or more cluster of users. For example, in case of advertising spot on a theatre event In the city of Milan, the cluster associated to this spot may be the one of the inhabitants of the city of Milan.

Afterwards, a video is associated to one or more users in the cluster of video. In the example above, the video could be associated to an Inhabitant of the city of Milan.

After the association, the video is transferred from the remote server 40 to the user device, a computer 30 or a mobile device 10, 20.

The transfer may occur for a request of the user, or according sending rules pre-set from the remote server 40.

Once the video Is in the memory of the device, the video is displayed on the device of the user.

The video contains at least a multimedia content to provide during the video, for example one or more images or a plurality of sound effects.

The multimedia content is superimposed to the video and is further displayed and/or played with respect to the play of the video randomly. In case of an image, this is displayed over the video frames. In case of a sound effect, this is reproduced over the sound of the video. Afterwards, it is asked to user to provide a feedback on the at least one image displayed or on the sound effect heard.

For example, the feedback may ask indicating how many times a certain image appeared or indicating how many images overall appeared or any relative request for the at least one image displayed.

The feedback provided from the user is then sent to the remote server that carries out the measure of the level of attention of the user for the video. This level of attention is function of the feedback provided from the user.

If the feedback provided overcomes a certain threshold, for example the 80 % of correct answers, preferably the 100 %, the user receives a prize. The prize may be a voucher to spend at the company in the advertise or the free access to the service.

The prize generates a positive anchorage of the user for the content of the message and Improves his visual responsiveness. Further, the prize increases in the user the affectivity associated to the content of the video and in case in which the video is an advertise, increases the loyalty for the product advertised.

The reward of the user through the prize may occur between two subsequent videos to increase the emotional sensibility of the user and the positive prejudice for the subsequent video.

The device of the user may be a mobile device in which a software is installed in advance to carry out the steps of transfer and display of the video, as well as the steps of asking a feedback to the user and sending the server the feedback obtained.

The video containing at least a multimedia content may be compliant to one or more features of the first object of the invention, namely the method for measuring the level of attention of a user.

Finally are described hereinafter some advantageous embodiments:
method for measuring the level of attention of a user according the present invention, wherein
the feedback of step C Is deemed positive if the user recognizes each multimedia content displayed and/or reproduced during the video displayed.

Method according what described above, wherein the second feedback provided from the user is positive is the user answers positively to at least one question displayed at the end of the video.

Method for measuring the level of attention of a user according the present invention, wherein the video playing and the image generated are displayed in a common portion of a screen. Method for measuring the level of attention of a user according the present invention, wherein the screen is the screen of cellular phone or a monitor of a computer.

## Claims

1. Method for measuring a level of attention of a user, wherein a user and a video currently playing on a device are provided, the method comprising the steps of:
A- showing said video to the user;
B- generating at least a multimedia content to be proposed contextually with the playing video;
C- asking the user to provide a feedback on the at least a multimedia content proposed;
D- measuring the level of attention of the user to the playing video on the basis of the feedback provided;
wherein said multimedia content is generated at step B so that it is overlapped and shown and/or played in a random way with respect to the playing video.

2. Method according to claim 1, wherein said multimedia content comprises an image or a audio signal.

3. Method according to claim 1 or 2, comprising the further steps of:
- proposing to the user at least a question about the played video at the end of the video;
- asking to the user to provide a second feedback on the at least a question proposed;
- measuring the level of comprehension of the video from the user on the basis of the second feedback provided.

4. Method according to any of preceding claims, wherein said image comprises a trademark or a word or a number when the multimedia content is an image.

5. Method according to any of preceding claims, further comprising the steps of:
- determining the reproduction length of the video;
- generating one or more video sections on the basis of the determined length;
inserting said at least a multimedia content in each video section generated.

6. Method according to any of preceding claims, wherein at least a multimedia content is shown and/or played in the first decile of the video and at least a multimedia content is shown and/or played in the last decile of the video.

7. Method according to any of preceding claims, wherein said Image covers less than 20% of the area wherein the video is shown, when said at least a multimedia content is at least an Image.

8. Method according to claim 7, wherein a central portion of said area where the video is shown is excluded from the visualization of the at least an image,

9. Method according to any of preceding claims, wherein the steps of claim 1 are repeated If the first feedback provide by the user does not reach a predetermined threshold.

10. Method according to previous claim, wherein the threshold is function of the number of times the multimedia content is proposed.

11. Method according to any of preceding claims, further comprising the steps of:
- asking to user to provide a third feedback on the approval rating of the video;
- measuring a level of interest on the video from the user on the basis of the third feedback provided.

12. Method according to any of preceding claims, wherein said multimedia content vanishes before the end of said video.

13. Method according to any of preceding claims, wherein said Image is visible on the video for less than 4 seconds, when said at least a multimedia content is at least an image.

14. Training method comprising a method for measuring the level of attention of a user watching a video according to any of preceding claims, wherein the video is a training course.

15. Method for broadcasting a video to a group of users for measuring their level of attention to said video comprising the steps of:
- collecting information on the consumer habits of the users and dividing the users into classes;
- providing a remote server containing a plurality of videos;
- associating the videos of said plurality to the classes wherein the users are divided;
- associating a video to at least a user so that the video and the user fall within the same class;
- transferring the video form the remote server to a device allocated to the user;
- showing the video on a screen of the user device, wherein the video contains at least a multimedia content to be proposed during the video, and wherein said multimedia content is overlapped and shown and/or played in a random way with respect to the playing video;
- asking to the user to provide a feedback on said at least a multimedia content;
- sending to the remote server the provided feedback;
- measuring the level of attention of the user to the video on the basis of the provided feedback;
- awarding the user if the provided feedback overcomes a predefined threshold.

16. Method for broadcasting a video according to claim 15, wherein the device is a mobile device configured to operate the steps of transferring, showing, asking and sending.

17. Computer program directly loadable in a memory of a smartphone and executable by a microprocessor unit of the smartphone, said program being able to implement the steps of any of preceding claims 1 to 13 when it is executed on the smartphone.
